(19) **Europäisches Patentamt / European Patent Office / Office européen des brevets**

(11) **EP 2 957 600 A1**

(12) **EUROPEAN PATENT APPLICATION**

(43) Date of publication:
**23.12.2015 Bulletin 2015/52**

(51) Int Cl.:
***C08L 83/04*** (2006.01)    ***A01N 1/02*** (2006.01)

(21) Application number: **15172412.7**

(22) Date of filing: **16.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **17.06.2014 IT PN20140033**

(71) Applicant: **Geneticlab S.r.l.**
**33170 Pordenone (PN) (IT)**

(72) Inventors:
• **Fabbri, ANDREA**
**36025 Noventa Vicentina (IT)**
• **Lapucci, CRISTINA**
**36025 Noventa Vicentina (IT)**

(74) Representative: **Giugni, Diego et al**
**Propria S.r.l.**
**Via della Colonna, 35**
**33170 Pordenone (IT)**

(54) **Chemical mixture for the stabilization and conservation of organic material as nucleic acids and cells, and related stabilization method**

(57) The present invention refers to a chemical mixture for the stabilization and conservation of organic material, preferably of human nature, such as for example cells and nucleic acids. In particular, the invention is relative to a mixture that makes it possible to stabilize and conserve at ambient temperature for a few days cells and/or nucleic acids isolated from a sample of human biological fluids such as, for example, whole blood. The mixture is characterized by the presence of siloxanic polymers.

FIG. 1

EP 2 957 600 A1

**Description**

TECHNICAL FIELD OF THE INVENTION

The present invention is relative to a chemical mixture for the stabilization and conservation of organic material, preferably of human nature, such as for example cells and nucleic acids. In particular, the invention is relative to a mixture that makes it possible to stabilize and preserve at ambient temperature for a few days cells and/or nucleic acids isolated from a sample of human biological fluids such as whole blood.

PRIOR ART

There is an increasingly clear necessity of performing molecular analyses, in particular on free nucleic acids present in the blood circuit. The analyses carried out on DNA and/or RNA present in the whole blood are also fundamental for a series of new genetic diagnostic processes in the prenatal and oncological context, as well as in many other fields of laboratory medicine. The objective of obtaining chemical mixtures or solutions capable of stabilizing the free nucleic acids present in the peripheral human blood is more pertinent than ever for modern science. For example, in Italy alone, in 650,00 childbirths a year the availability of non-invasive prenatal molecular tests carried out on maternal blood would lead to a saving for the national health system of over 300 million euro on the cost of the current invasive cytogenetic analyses that are not necessary because they are derived from the current screening tests of the first three months of pregnancy (blood tests and nuchal translucency), which yield false positive results.

In particular, the nucleic acids present in the bloodstream are subject to specific degradation events due both to the presence of digestive enzymes present in the blood and to the degradation of the cells in the blood itself. Nucleic acids such as free DNA and/or RNA in the bloodstream can be attacked by enzymes such as DNAases and/or the RNAases present in the bloodstream or released by the cells present in the blood that undergo lysis resulting from the collection, transportation and handling of the biological sample.

Nucleic acids have an extremely significant clinical importance for the analysis of many diseases. For example, it is possible to isolate the free fetal DNA present in the maternal blood in order to assess the probability of the fetus being affected by Down syndrome (trisomy 21). With this type of test it is also possible to assess the probable presence of other chromosomal anomalies such as trisomy 13 and trisomy 18. The representation of the free fetal DNA in the bloodstream results from the breakdown of the placental cells. Through this DNA it is also possible to determine the sex of the fetus and any anomalies in the sex chromosomes (X and Y); in this manner it is possible to identify both the genetic sex of the fetus and any numerical anomalies in the sex chromosomes. In high-risk populations (over age 35), exams of this type are characterized by very high sensitivity and specificity (>99% for the trisomy of chromosome 21). The test can also be carried out in the general population (e.g., women <35 years), however, at present there are no sufficient data available to define the precision of the test, which in these cases could be lower.

It is evident that the availability of chemical molecules capable of stabilizing free DNA could significantly lower the number of patients that will needlessly undergo amniocentesis and/or chorionic villus sampling, resulting not only in a saving for the health system but also in a marked reduction of abortions linked to the technicalities connected to this invasive type of analysis.

What is more, free nucleic acids are also present in the bloodstream of cancer patients, and their investigation could be extremely important in the therapy of these patients.

Significant tests have recently been perfected for the quantification of free DNA circulating in the plasma. This has made it possible to prove that the quantification of the circulating DNA through a refined molecular methodology can be a useful diagnostic instrument to discriminate patients with a tumor from healthy individuals and, potentially, to identify higher cancer-risk individuals, such as heavy smokers, in the very initial phases of the disease. Moreover, this test can be used as a non-invasive method for an early identification of cancer relapse and metastasis during the follow-up of the patients.

Further, the recent introduction of the concept of proteomic analysis has made it possible to recognize proteic structures, such as endothelin and keratin, and to hypothesize their involvement in the carcinogenic process. This fact, if confirmed, could be both an early marker for the diagnosis of non-small-cell lung carcinoma (NSCLC) and a monitor of the reduction or progression of the disease during the patient follow-up process.

Unfortunately, in the current state of knowledge in research and technology, free DNA (or RNA) in the bloodstream is a very delicate molecule that is easily degradable due to the conditions of the blood itself. Up to now, to isolate free DNA it is necessary to implement particular laboratory expedients with freezing of the biological sample, which often results in an alteration of the same biological sample. For example, the percentage of nucleic acids present in the collected sample of fetal DNA present in the mother's plasma does not exceed 25%, and the existing methods are capable of recovering for diagnostic purposes an average of at most 1 % of said fetal DNA. In fact, methods have been developed based for example on dimensional fractionalization through electrophoresis, but such methodologies are complex and give unpredictable yields. In addition, the higher values can be obtained only when the collection is carried out well into pregnancy, that is, when a risky therapeutic operation is by then necessary.

SUMMARY OF THE INVENTION

The technical problem at the basis of the present invention is therefore that of providing chemical components for the stabilization of organic material that does not cause alterations of the biological sample and that is capable of providing high percentages of free nucleic acids suitable to be used in molecular/genetic diagnostics.

This problem is solved by components comprising polymeric substances that are particularly effective in the immediate stabilization of organic material, such as nucleic acids, through protection against the action of digestive enzymes.

A first objective of the present invention is therefore a polymer-based chemical mixture for recovering biological material like nucleic acids and cells coming from a biological sample for diagnostic purposes.

A second objective is a mixture also comprising substances capable of encapsulating nucleic acids and preventing the attack of degrading molecules.

A third objective is a mixture that also comprises substances suitable for stabilizing the primary structure of nucleic acids.

A fourth objective is a mixture that also comprises substances suitable for preserving biological material at ambient temperature for a few days.

A further objective is a mixture for the recovery, stabilization and conservation of biological material in a container for diagnostic tests.

One still further objective of the invention is a method for recovering, stabilizing and conserving biological material from a biological sample comprising a step of bringing said mixture into contact with a biological sample.

A still further objective is the use of chemical substances for stabilizing/ conserving isolated organic material even at ambient temperature.

Further objectives are the fine-tuning of diagnostic methods or the identification of sequences of modified nucleic acids or of new clinical applications comprising a step of bringing said mixture into contact with an isolated sample of biological fluid.

BRIEF DESCRIPTION OF THE FIGURES

Further characteristics and the advantages of the mixture and of the method for recovering, stabilizing and conserving biological material according to the present invention will become more evident from the following description of some embodiments given purely by way of non-limiting example with reference to the following figures, in which:

- figure 1 is a TIC (Total Ionic Current) chromatogram of an aliquot of free DNA derived from plasma extracted from whole blood, after the collection and mixing with the mixture in accordance with the present invention, not derivatized, and GC-MS (Gas chromatography-Mass spectrometry) analysis;
- figures 2a and 2b illustrate an example of a series of mass spectra relative to the derivatization of the mixture of the invention, on the basis of the chromatogram of figure 1 and the identification of the molecules by comparison with spectral libraries;
- figure 3 is a chromatogram of all the compounds of the mixture of the invention (TCC, total composition chromatogram);
- figure 4 is a TCC chromatogram with different types of LC (liquid chromatography) columns with growing polarity on the eluate corresponding to the chromatogram of figure 3;
- figure 5 is the chromatogram of figure 4 with a filter on the overall SCORE value > 50%;
- figure 6a illustrates the results of the chromatogram spectrum of figure 5;
- figure 6b illustrates the computerized processing with the ChemSpider program of the construction of the empirical monomeric formula using the molecular mass data shown in figure 6a.

DETAILED DESCRIPTION OF THE INVENTION

The nucleic acids found in the bloodstream are affected by particular degradation events due to the presence of digestive enzymes in the blood and to the degradation of blood cells. Free nucleic acids such as DNA and/or RNA in the bloodstream can be stabilized by a series of compounds that protect primarily the chemical structure of DNA (deoxyribonucleic acid) and RNA (ribonucleic acid) and at the same time preserve the structure of some blood cells, preventing their breakup, without at the same time releasing digestive enzymes for the free DNA and/or RNA, as for example, but not only, DNAases and/or RNAases.

The main objective of the present invention is therefore to fine-tune and validate a mixture or chemical solution for stabilizing free nucleic acids present in the maternal blood, and specifically to identify a particular class of compounds, the siloxanes and the relative polymers, capable of maintaining the stability of the nucleic acids present in the bloodstream and thus to make DNA and/or RNA available for their subsequent testing. The stabilized nucleic acids from the classes of molecules of the present invention are in the chemical conditions that allow them to be analyzed with procedures typical of medical genetics, molecular biology and for other purposes of medical diagnosis or for research purposes.

The class of oxylanic, siloxylanic or polyoxylanic or polysiloxylanic polymeric derivatives has revealed itself surprisingly effective in protecting both the DNA and the cells from degradation.

In general, polymers are aggregates of molecules (monomers) having a molecular weight in the order of thousands and more dalton. Depending on their structure, polymers can be linear or not linear. In the first case, the monomers are arranged approximately in a long chain, called main chain. Other chains or individual atoms are then laterally attached to this chain. Often, the long polymeric chain is characterized by having a constant segment along the whole length of the polymer: this segment is called repetitive unit, and in the written formula it is placed between square brackets with a subscript number that shows the number of times it is repeated.

When the polymer is formed from the joining of monomers of the same type, it is called homopolymer; on the other hand, when the polymeric chain is formed by the joining of different types of monomers, it is a copolymer. When equal monomers are grouped together, so as to form a polymer from the joining of two homopolymers, the result will be a block copolymer; when the two different types of monomers are arranged randomly, the resulting chain will be a statistical or random copolymer. A more particular case, which acts as a borderline between linear and non-linear copolymers, is represented by the graft copolymer, in which polymer chains made up of a monomer B are grafted on a monomer polymeric chain A.

As already mentioned above, atoms do not necessarily have to arrange themselves in long linear chains; in this case, we have non-linear polymers. If there are many side chains, it may happen that all the main polymer chains in the polymer are attached to each other, thus forming an enormous three-dimensional cross-linked network. When this occurs, the polymer becomes in effect a single large molecule.

The subject of the structures of non-linear polymers becomes more interesting when we talk of star polymers or dendrimers. These two structures are in fact those most widely used in the biomedical field. In the star structure, the ends of a plurality of polymeric chains are linked together in a common center, while in the dendrimer there is the repeated branching of the branches, hence the Greek name dendrimer meaning "tree".

Siloxanes are a class of chemical compounds in whose structure there is a repetition of the $R_2SiO$ functional group, where R is generally a hydrogen atom or an alkyl or acrylic group. The term siloxane stems from the combination of silicon, oxygen and alkane. They are considered as belonging to the class of organosiliceous compounds.

Siloxanes have a main chain, linear or branched, in which silicon and oxygen atoms alternate according to the sequence -Si-O-Si-O-, with the side chains R linked to the silicon atoms. This chain can also loop upon itself to form a cyclic ring, thus forming cyclic siloxanes.

Some more complex structures are also known, as for example one with eight silicon atoms arranged at the apexes of a cube connected by 12 oxygen atoms along the edges.

The polymers of the siloxanes, where R is a linear or cyclic alkyl group, are commonly known as silicones or "polysiloxanes". The most representative examples of these polymers are $[SiO(CH_3)_2]n$ (polydimethylsiloxane) and $[SiO(C_6H_5)_2]n$ (polydiphenylsiloxane). All the derivatives of silicone can be classified more generically in the branch of antifoaming substances since they prevent the emulsion between air and chemically polar agents. Further, some classes of siliconic derivatives have been proposed for carrying DNA from outside to inside the cells for therapeutic purposes. These products have been tested in vitro for their capacity to fuse, that is, to integrate, with the cell membrane so as to release DNA inside the cell. Thus, their chemical nature must be such as to allow the contact by affinity with the cell membrane and their integration into the same.

The present invention is based on the discovery that some particular classes of oxylans or oxylanic polymers stabilize, surprisingly, the biological sample of blood and consequently stabilize the free nucleic acids present therein.

The structure of the nucleic acids is normally degraded by DNAases or RNAases present in the blood and by particular enzymes called topoisomerases, also present in the blood, which very rapidly degrade the free nucleic acids. To maintain the structure of DNA and/or RNA in the bloodstream, it is necessary to build up in the newly collected biological sample molecular structures that protect DNA and/or RNA from degradation. At the same time, these molecular structures must prevent the contact and integration with the cell membranes so as to avoid the passage of DNA inside the cells. In fact, if this happened, the free DNA would be lost because on one hand it would be incorporated in the cell and on the other hand it would be subject to degradation caused by said enzymes.

The oxylanic polymer used in the present invention makes it possible to avoid this problem. Essentially, it is believed that the oxylanic polymers arrange themselves around free DNA and/or RNA, isolating it from the rest of the components present in the blood, using water as a means to build a sort of cage around free DNA and/or RNA, without fusing with the cell membrane.

This particular class of siloxanic polymers is characterized by the presence of cyclic rings, but also heterocyclic rings, that however contain at least one or more silicon atoms, preferably from a degree of viscosity greater than or equal to 1.5 g/L and/or greater than or equal to 1200 cSt (centiStokes; 1 Stoke (St) = 1 x $10^{-4}$ $m^2/s$ = 1 $cm^2/s$; 1 $m^2/s$ = 106 cSt) calculated at 25°C and/or a viscosity of 2.6 cP (centipoise cP = 1 mPa•s = 0.001 Pa•s) at 25°C, and a combustion point (flash point) higher than or equal to 55°C calculated with the closed-cup system. Stokes' law of 1851 expresses the frictional force that an ideal sphere experiences in a laminar flow in a fluid, with a Reynolds number lower than $10^4$. This law can be expressed as follows:

$$F_d = -6\pi\mu r v$$

where $F_d$ is the frictional force, $\mu$ is the viscosity, $r$ is the radius of the sphere, and $v$ is the flow velocity relative to the sphere. If the Reynolds number is greater than 1, the law becomes quadratic. But since a spherical body immersed in a fluid experiences the force of gravity, the frictional force of the fluid and the principle of Archimedes, Stokes' law showed that the sphere achieved a condition of equilibrium so that the sphere moves at a constant speed (termed terminal falling velocity).

Stokes' law is based on the fact that the higher the viscosity of the liquid, the lower the speed of a spherical body allowed to fall freely in said liquid. But a sphere that falls through a liquid only under the effect of gravity, at a certain point in its movement achieves a constant speed, which occurs when the resistance opposing the viscosity of the liquid is exactly balanced by the gravitational pull. The dimensions of the particles are also important: the smaller they are, the smaller is their settling (or surfacing) speed. However, their excessively small dimensions entail an appreciable increase in the overall specific surface of the dispersed mass and therefore an increased instability. Stokes' law correlates the density, the gravitational acceleration and the volume of the immersed body. Stokes' law is stated coherently at the international level in the IUPAC Compendium of Chemical Terminology, informally known as IUPAC Gold Book, "Stokes l aw".

Preferred examples of siloxanic polymers that satisfy these conditions are linear or cyclic siloxanes, that is, siloxanes whose main chain is linear or closed upon itself to form a cyclic ring, having the general formula $[R_2SiO]_n$ where $R_2$ represents two alkyl groups, linear or branched, or an alkyl or aryl cycle or a saturated or unsaturated or aromatic heterocycle, in particular polydimethylsiloxane, polydiphenylsiloxane and octamethylcyclotetrasiloxane, and all the other chemical compounds in which in the main chain is present at least one cycle or heterocycle and are produced through a process of ring opening polymerization, induced by ionic initiators, that starts from cyclic alkoxysilanes (trimers and tetramers), as for example polydimethylsiloxylane, obtained through hydrolysis of dimethyldichlorosilane.

Oxylanic polymers are used in the form of a 100% aqueous solution. Their concentration ranges from 0.005 to 300 mg/wt of the aqueous solution of the polymer per ml of mixture of the invention. Preferably, they are present in concentrations from 0.5 mg/ml to 200 mg/ml, more preferably from 25 mg/ml to 150 mg/ml.

In accordance with a preferred embodiment, the mixture of the invention also comprises, in addition to the oxylanic polymers, branched alkanes such as branched alcohols, in particular polymers of glycerol and derivatives of polyethylene glycol. In fact, it has been observed that such compounds are capable of stabilizing the cells normally collected in a blood sample.

In particular, said alkanes are represented by block and star polymers of polyethylene glycol made up of two parts, a hydrophilic one and a hydrophobic one. The hydrophilic component is given by poly-ethylenoxyde-monomethyl ether (Me-PEG) having the formula $CH_3-[O-CH_2-CH_2]n-OH$. Me-PEG is also biocompatible and eliminable after the extraction of the nucleic acids from the biological sample. It must in fact be borne in mind that the objective of the present invention is the stabilization of nucleic acids such as free DNA and/or RNA in the bloodstream for their subsequent extraction in the laboratory and subsequent molecular, genetic, clinical and medical analysis. The hydrophobic part of the polymer, on the other hand, may consist for example, but not only, of poly-caprolactone (PCL) having the formula $H-[O-(CH_2)_5-CO]n-OH$. PLC is biodegradable, semi-crystalline, and is degraded either by hydrolysis of the ester bond or by enzymatic attack.

Block copolimers are considered very promising biomaterials; in fact, using segments of different nature, hydrophilic and hydrophobic (for example, PEO, PCL) it is possible to obtain amphiphilic systems that have a natural tendency to self-aggregate in an aqueous environment, giving rise to orderly structures of core-shell type of spherical shape and nanoscopic dimensions. The core is formed solely by the segment of hydrophobic type, and it is the one in which lipophilic medicines can be loaded; the shell, on the other hand, is completely of hydrophilic nature and has the dual purpose of protecting the core and guaranteeing the solubility of the nanoparticle in an aqueous environment and, therefore, to guarantee the protection of the cell and the stabilization of nucleic acids such as free DNA and/or RNA in the bloodstream.

To achieve these specific purposes, the polymers resulting from the derivatizations of alcohols such as the glycerol of the present invention must have specific requirements:

- biocompatibility: that is, a substantial inertness toward the surrounding physiological environment such that the cells of the biological sample may be "unaware" of its presence and thus expel it or absorb it with the ensuing production of toxic or harmful substances for free nucleic acids such as DNA and/or RNA in the bloodstream;
- biodegradability: implying processes involving a progressive deterioration of the properties of the polymeric material, with the formation of fragments of lower molecular weight that are eliminated following the subsequent extraction of DNA and RNA in the laboratory.

In addition, the degradation speed must be such that said copolymers have a "controlled life", so that they degrade into compounds of low molecular weight, during or at the end of the function performed by them in the biological sample. Further, these polymers are in the form of an aqueous solution of 50% gram/milliliter, and their concentration ranges from 0.025 to 800 mg in weight of said solution per ml of mixture of the invention. Preferably, they are present in concentrations of 0.5 mg/ml to 700 mg/ml, more preferably from 25 mg/ml to 600 mg/ml.

For the purpose of determining the correct function of the polymer, as for example but not only polymers derived from glycerol and the derivatives of polyethylene glycol, a study was carried out with characterization techniques aimed at disclosing the polymer at the structural, thermal and chemical-physical level. The main characterization techniques used have been: viscosimetry in a diluted solution; nuclear magnetic resonance (NMR); steric exclusion chromatography (SEC); C differential scanning calorimetry (DSC).

Nuclear magnetic resonance (NMR)

NMR is a particular technique for obtaining information regarding the molecular structure. In a nuclear magnetic resonance spectrometer, the sample is inserted into a magnetic field and a radio frequencies field is also applied. The magnetic field applied is slowly increased, and the excitation of the nucleus from an energetic level to another (resonance) is detected as an induced voltage, resulting from the absorption of energy from the radio frequencies field. An NMR spectrum is given by the recording of the induced voltage, based on the variation of the magnetic field. The area under the peak depends on the number of nuclei that have made the shift. Different nuclei resonate at different frequencies. This means first of all that a carbon atom must be hit by a radio wave with a different frequency with respect to the one necessary for a hydrogen atom to resonate, but also that similar atoms in different environments, like a hydrogen atom bound to an oxygen atom and a hydrogen atom bound to a carbon atom, resonate at different frequencies. Thanks to the NMR, it is therefore possible to determine the presence of a given atom by comparing its peculiar characteristics with those recorded by the instrument.

Most NMR spectrometers are formed by only a refrigerating cell filled with two liquids at temperatures close to absolute zero. The center of the cell contains He at the lowest temperature, which in contact with a coil allows it to behave as a superconductor. This approach is essential because the technique requires the use of an enormous magnetic field and thus of a large input of electric energy, which however is limited by avoiding any resistance from the coil. When a sample is being prepared for NMR spectroscopy, the solvent or part of the solvent used must be deuterated, that is, it will be necessary to substitute the hydrogen atoms with deuterium atoms. Hydrogen is a very active nucleus in NMR, therefore it is first of all necessary to deuterate it to avoid having the instrument seeing a heightened response of the nuclei of the solvent.

Differential scanning calorimetry (DSC).

DSC is a method used to study the changes that occur in a polymer when it is heated. The instrument for the DSC is formed by two containers, in one of which is placed the sample of polymer, in the other is placed a reference sample. These samples are placed under a heater that communicates with a computer.

This computer is set with a heat cycle, and checks that the two separate containers, each one with its own heating element, warm up with the same heat flow. Hence, the heat flow supplied by the machine and the temperature of the polymer are the two coordinates of the graph resulting from the DSC. From the graph, based on the shape of the curve, it is possible to determine:

- glass transition temperature (Tg): the curve shows a "rise" due to the rising of the specific heat caused by the secondary phase transition; since the passage comes with a "jump", normally the medium point of the section is taken as Tg;
- crystallization temperature (Tc): the curve shows a depression due to the exothermic nature of the primary transition, which results in a smaller need of heat coming from the machine;
- melting temperature (Tm): the chart shows a concave curve due to the endothermic nature of the primary transition, which leads to a greater demand for heat coming from the machine.

Further, comparing the crystallization and fusion areas, with simple mathematical calculations it is possible to obtain the value ΔH, essential to reach the crystallinity level of the polymer.

Viscometry in diluted solution

This characterization method for knowing the average molecular weight is based on the principle that a molecule with a greater molecular weight makes the solution more viscous. This is due mainly to two factors: the greater hydrodynamic volume (the volume that the polymer wound in a spiral acquires in solution), which tends to hinder the movements of the molecules of the solvent, and a stronger bond of the molecules of solvent with the polymer, which tends to further slow down the movement.

To gauge the viscosity, it is necessary to use a tube with an enlarged part, and to measure the time it takes for a fixed volume of solution to flow through it. The accuracy of the measurements is checked by measuring the time taken by the solution to pass between two lines located at the end of the enlarged part. The enlargement is used to increase the volume between the two lines. Without it, the time in which the level of the solution passes from one line to the other would be too short to be measured. This time is called "Outflow time". An essential factor for all viscometry measurements is the outflow time of the pure solvent, without any polymer dissolved in it, the so-called "t0".

Steric exclusion chromatography (SEC)

The thermal and structural characterization was relatively simple, but the chemical-physical characterization is somewhat more complicated. This type of characterization aims, in fact, to calculate the molecular weight of the polymer. However, since polymers are formed by a plurality of chains of different molecular weight (PM), it is possible to calculate only the average molecular weight. Hence, there are "various" molecular weights:

- Number average molecular weight, Mn

This is the total weight of the polymeric molecules divided by the number of polymeric molecules.

- Weight average molecular weight, Mw

This is a weighted average that takes into account the fact that a large molecule contains a greater quantity of the total mass of the polymer sample compared to the quantity contained by the smaller molecules.

- Viscometer average molecular weight

However, to have a complete distribution of the molecular weight it is necessary to resort to another type of techniques such as steric exclusion chromatography (SEC) and MALDI mass spectrometry (Matrix-Assisted Laser Desorption/Ionization).

SEC is a technique for calculating the distribution of the molecular weight distribution around an average, that is the number of molecules of a polymer in a sample that effectively are of average molecular weight, how many are of higher weight, how many are of lower weight, and by how much they are higher or lower.

Firstly, the polymer is dissolved, usually in tetrahydrofuran (THF). Next, this solution of the polymer is injected into a "chromatographic column". This column is filled with tiny beads of cross-linked polystyrene. The cross-linked state is to prevent the polymer to be analyzed from dissolving in the THF. Moreover, the beads have very small pores of different sizes. When the solution is injected into the chromatographic column, these pores tend to capture the polymer molecules deflected from their path. Each polymer molecule remains briefly in the pore, from where it is released and moves to another pore. Thus, in the end, the solution reaches the end of the column. However, this does not occur at the same moment for all the molecules of the polymer. Large molecules of heavier molecular weight cannot pass through some of the smaller pores; since there are few pores in which large molecules can be captured, those molecules go through the column quickly. On the other hand, the smaller polymer molecules will take longer to elute because they can be "trapped" by a larger number of pores. Thus, when a steric exclusion chromatograph is properly calibrated, it is possible to know the molecular weight of the polymer based only on the time it takes to elute through the column. Moreover, there are devices capable of counting the number of polymer molecules that reach the end of the column at the same moment, thus making it possible to plot the graph that has at its abscissa the lime elapsed, and at its ordinate the number of molecules. If the growth direction is reversed, the unit of time can be simply substituted with the unit of weight, thus indicating the distribution of the average molecular weight of the polymer.

The methods described above led to the conclusion that the use of polymers derived from the class of alcohols like glycerol with a molecular weight between 2,000 and 12,000 dalton was useful for the purpose of the present invention. The branching of the polymer and of the dendrimers corresponds effectively to a stabilization of the cells of the biological sample and of the subsequent stabilization of free nucleic acids in the bloodstream, such as DNA and/or RNA.

Preferably, such polymers are chosen from Me-PEG-PLC and Me-PEG-PEL.

According to a further aspect of the invention, the mixture includes aldehydes, preferably derivatized with $C_1$-$C_6$ alkyl functional groups, preferably methyl, ethyl, butyl and propyl groups and/or alkyl chains containing up to 20 carbon atoms. These molecules are capable, for example, of increasing the percentage of free fetal DNA collected from the maternal bloodstream. It was shown that the inhibition of the lysis of the maternal cells effected by the polymers derived from glycerol is also achieved through the addition of aldehydes derivatized also in solutions buffered with suitable salts such as, for example, but not only, $NaHPO_4$ and/or, preferably, $NaH_2PO_4$. The implementation of precise protocols for treating the sample also leads to a considerable increase in the percentage of free fetal DNA collected. The concentration of aldehydes falls between 300 $\mu$l and 10 $\mu$l of a 20%/50% g/ml aqueous solution in 1 ml of mixture of the invention, preferably between 200 $\mu$l/ml and 30 $\mu$l/ml, more preferably between 100 $\mu$l/ml and 50 $\mu$l/ml.

According to a preferred aspect of the invention, the mixture includes one or more of the following two classes of molecules: tetracarboxylic acids, quaternary ammonium or phosphonic acids.

Among the tetracarboxylic acids, the preferred ones are selected from the group consisting of etylendiaminetetraacetic acid (EDTA), acid-citrate-dextrose and/or with the citrate-phosphate-dextrose-adenine (CPDA) solution. In particular, EDTA is a tetracarboxylic acid provided with two electronic doublets (Lewis donors) belonging to nitrogen. These characteristics make the ethylendiaminetetraacetate anion EDTA4- a hexadentate ligand. Consequently, at ambient temperature, it imparts an acid reaction to DNA, returning it as a polycarboxylate anion. Tetracarboxylic acids are present in the mixture in concentrations between 400 mg and 20 mg in weight per 1ml of mixture, preferably between 300 mg/ml and 30 mg/ml, more preferably between 200 mg/ml and 50 mg/ml.

In general, the tricarboxylic acids used in the present invention have a chelating action at high concentrations, thanks to the presence of carboxylic groups and of two nitrogen atoms that give the EDTA molecule the capability of forming stable compounds with a wide range of cations.

However, not only free tricarboxylic acids are used, but also their hydrate salt form is used, such as, for example but not only, the use of calcium-disodium dihydrate $C_{10}H_{14}N_2O_8Na_2 \cdot 2\,H_2O$ of EDTA, in particular due to its solubility in water. Calcium-disodium EDTA (CaNa-EDTA), not to be confused with disodium EDTA, is the only form of EDTA approved by the FDA as medical treatment for the chelation of lead. Calcium-disodium EDTA has a greater affinity, in order, for mercury, lead, zinc (thus it is an inhibitor of metalloproteinase), other heavy metals and least with calcium. The salts of tetracarboxylic acids stabilize nucleic acids such as free DNA and/or RNA, as they are capable of chelating heavy metals and resolving the problems of self-degradation of free nucleic acids. In addition, as they make the nucleic acids free from heavy metals, they make them suitable to be analyzed at the laboratory level for chemical, genetic and molecular testing.

Another important molecule in the solution for the stabilization of free nucleic acids is associated with quaternary ammonium salts, as for example but not only betaine, which in chemistry is a neutral compound with a positively charged cationic functional group, such as for example a quaternary ammonium or phosphonium, that however does not bind with hydrogen, and with a negatively charged functional group such as a carboxylate that is not proximate to the cationic site. A betaine can therefore be a specific type of zwitterion. Historically, the term was reserved only for trimethylglycine. The zwitterions of this type have the capability of "unwinding" the double helix of nucleic acids, thus making the zones rich with cytosine (C) and guanine (G) bases particularly analyzable. The CG-rich zones of DNA tend to wind upon themselves to create a sort of molecular superstructure due to the hydrogen bonds made possible also by the water present in the biological sample. To make the free nucleic acids in the bloodstream analyzable it is essential to spread out these zones: the phosphones or the quaternary ammonium salts, such as for example phosphonic betaines, are intermediate compounds in the Wittig reaction and are present in the mixture at a concentration between 20 mg and 400 mg in weight for 1 ml of mixture, preferably between 50 mg/ml and 300 mg/ml, more preferably between 80 mg/ml and 200 mg/ml.

In particular, the quaternary ammonium salts, such as for example but not only betaines, serve as organic osmolytes, substances synthetized or obtained from the confined environment of the biological sample, and in particular from the cells for protection against osmotic stress, and high salinity or temperature. The intracellular buildup of betaine, without upsetting the enzymatic function, the structure of the proteins and the integrity of the membrane, allows the water retention in the cells, protecting their lysis, and spreading the free nucleic acids in the biological sample. It is also an increasingly important methyl donor capable of overcoming supermolecular structures such as clathrates.

ANALYTICAL INVESTIGATIONS

The following analytical methods were applied to demonstrate the effective maintenance of the DNA through the use of the previously described mixture.

METHOD # 1: HS-GC-MS (HEADSPACE GAS CHROMATOGRAPHY/MASS SPECTROMETRY)

Conditions

- Injection: Oven temperature 80°C, agitation at 300 rpm, equilibration time 20 minutes, manual injection by syringe
- GC column: HP-5MS UI (30m x 0.25mm x 0.25 $\mu$m)
- Scanning acquisition for minimum boiling point azeotropes 20-400 m/z

The sample was analyzed diluted in methanol 1/10 and 1/100 v/v.

METHOD # 2: GC-MS (GAS CHROMATOGRAPHY/MASS SPECTROMETRY) WITH SAMPLER FOR LIQUIDS

Conditions

- GC column: HP-5MS UI (30m x 0.25 mm x 0.25 $\mu$m) and CP-Wax 58 FFAP (25 m x 0.20 mm x 0.30 $\mu$m)
- Scanning acquisition for minimum boiling point azeotropes 40-400 m/z
- Scanning acquisition for maximum boiling point azeotropes (alto bollenti) 50-600 m/z The sample was analyzed diluted in methanol and after derivatization with MSTFA (N-methyltrimethylsilyltrifluoroacetamide).

METHOD # 3: LCQTOF (Liquid Chromatography Quadrupole Time-of-Flight) Conditions:

- LC column: various (see conditions of investigations in LC-qTOF)
- phase A: water + 5 mM ammonium formate + 0.01 % formic acid
- phase B: methanol + 5 mM ammonium formate + 0.01 % formic acid Gradient chromatography

# ESI (+) / ESI (-) acquisition (Electron Spray Ion)

- SCAN 50-1200 m/z, 3 spectra/sec
- ALL ION CE OV, 20V and 40V
- AutoMSMS CE 20V and 40V

The sample was analyzed diluted in water at different concentrations.

The pH of a diluted solution 1:1000 about 6.02.

All the chromatographic methods were applied after the extraction of DNA from 4 ml of plasma extracted from whole blood.

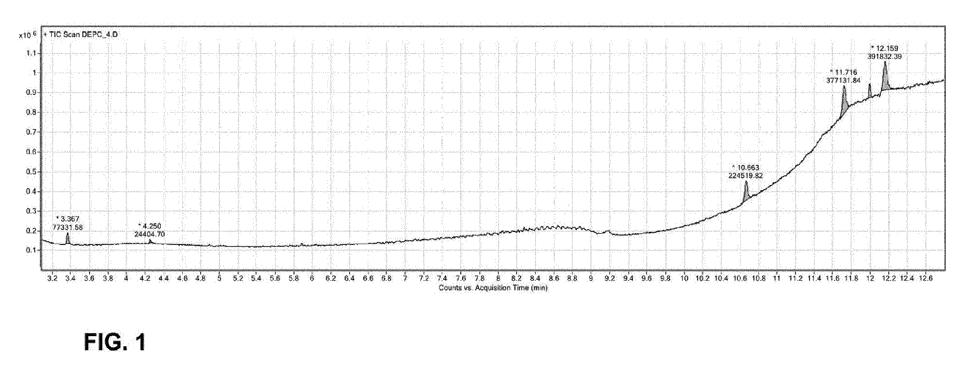

As shown in figure 1, the results indicate the presence of clathrates relative to the TIC chromatogram of the GC-MS analysis, not derivatized. The peaks shown in grey were subsequently investigated in GC-MS (Gas chromatography-Mass spectrometry) spectral libraries, detected by the chromatographic system itself and not ascribable to the sample.

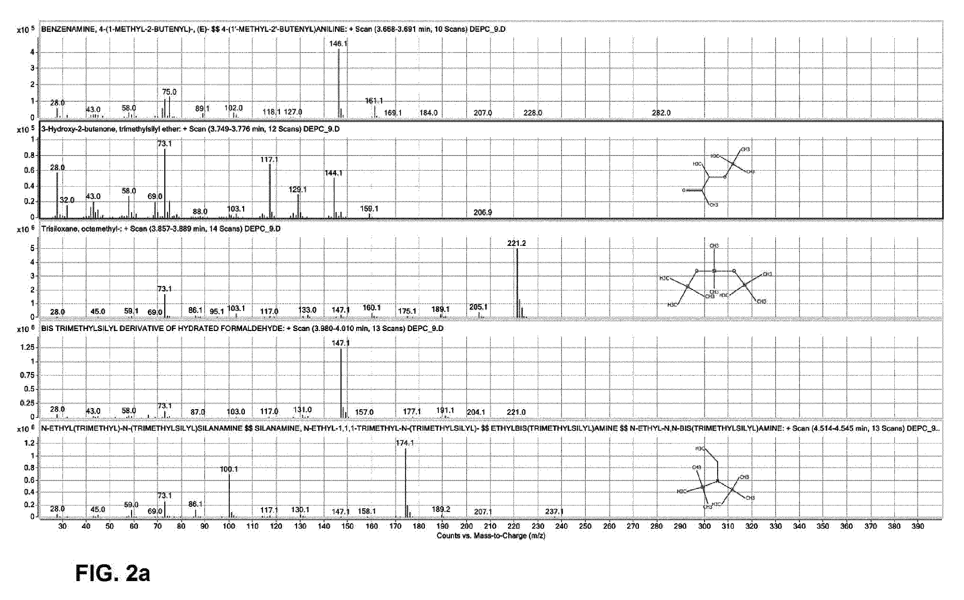

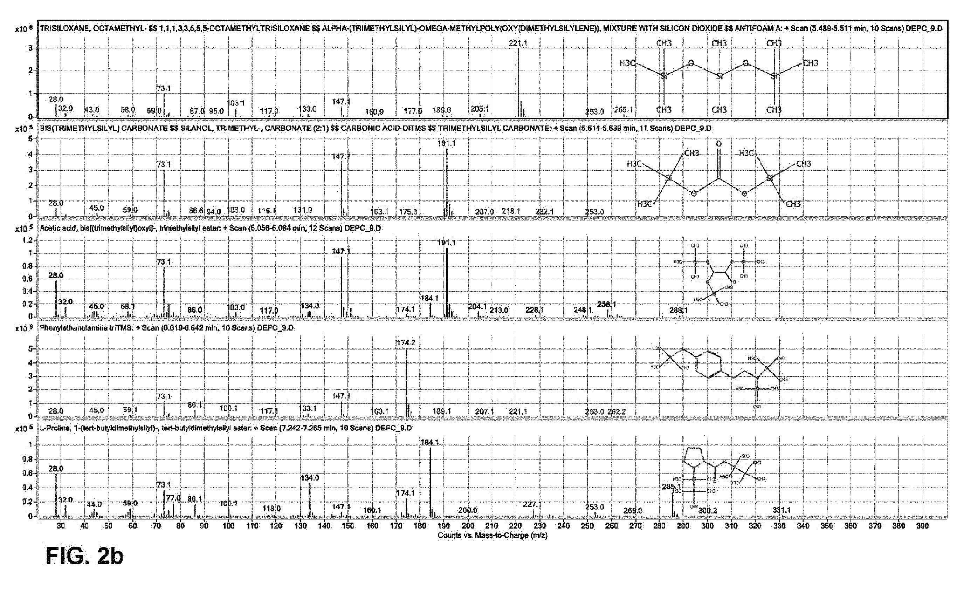

The derivatization process made it possible to evidence the presence of numerous peaks (figures 2a and 2b), whose identities were investigated within the same spectral libraries. All the results with SCORE > 75% are shown in the mass spectra of figures 2a and 2b. The peaks correspond to different oxylans that, being evenly distributed, protect the free DNA.

Although mass specters are connected to different chemical compounds, the presence of the $R_2SiO$ chain that repeats itself in an organized manner effectively protects the free nucleic acids by building a sort of cage, using the water that the is normally present in whole blood.

To establish the confirmation of the protection of free DNA by the oxylanic polymers, a liquid chromatography (LC) according to the following plan was also carried out.

Investigations in LC-qTOF

Conditions:

- Use of LC columns tested at different degrees of polarity:

  ◦ ZORBAX Eclipse Plus C18, RRHD 2.1 x 150mm x 1.8 um
  ◦ ZORBAX Eclipse Plus Phenyl-Hexyl, NBRR 2.1 x 100mm x 3.5 um
  ◦ Polaris 3 C8-Ether 50 x 3.0mm
  ◦ Synergi 4u Hydro-RP 80°
  ◦ Atlantis ® T3, 1.0 x 150 mm x 3 um
  ◦ Hypercarb, 100 x 2.1 mm x 3 um

The chromatographic methods were optimized according to the characteristics of the individual columns, based on the matrix of the column itself and on the retention time expected for the various chemical compounds. The acquisition in mass spectrometry was, on the other hand, maintained unaltered for all the tests and, compatibly with the results, the data were acquired in ESI(+), ESI(-), full SCAN, ALL ION and autoMS/MS.

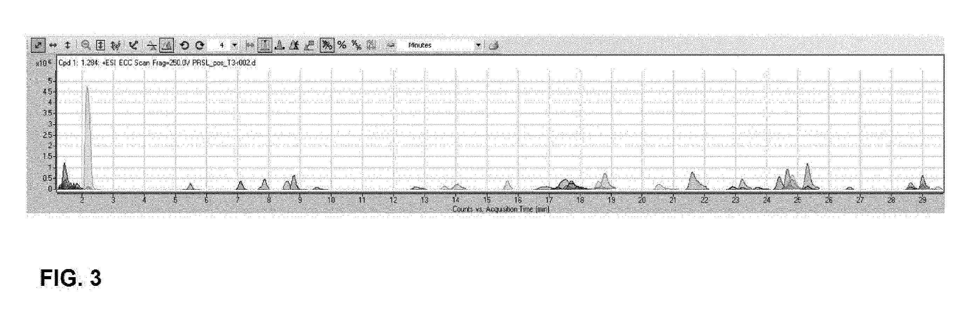

The extraction of a total compound chromatogram (TCC), that is, a chromatogram relative to all the compounds that the alignment software (ChemSpider) in a databank can obtain from the reprocessing of the data, is shown in figure 3.

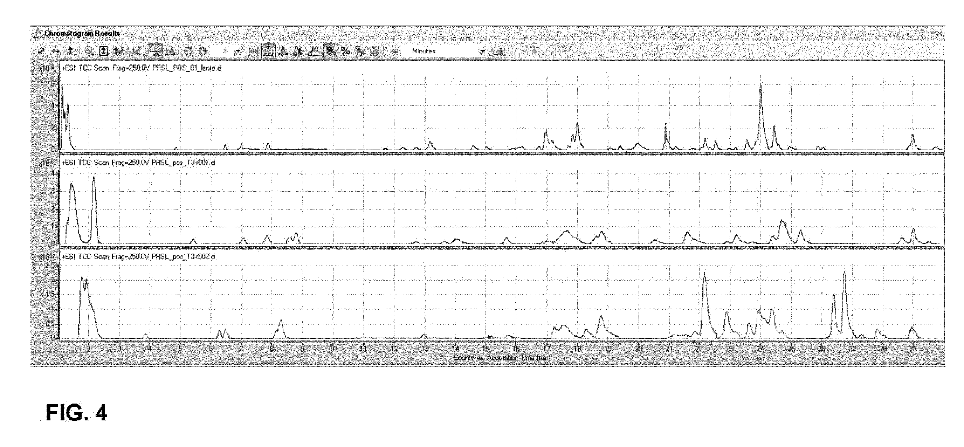

The zone with the densest number of peaks is localized within the first few minutes of elution, so some tests were carried out with LC columns at growing polarity to attempt to better separate the coeluting molecules. The best results were obtained with the Atlantis T3 column (see Figure 4, 2nd chromatogram).

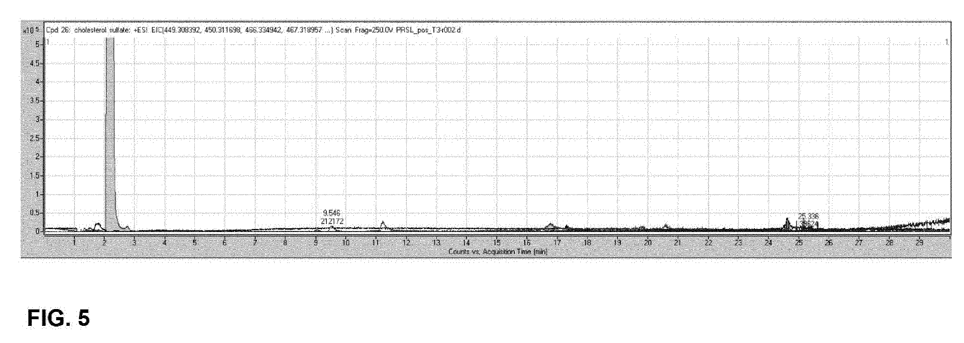

The number of peaks, each one potentially corresponding to an analyte, is high; however, if a filter is applied on the value of total SCORE > 50% (processed on the basis of matching accurate mass, types of isotopes and isotopic spacing), the number of chromatographic peaks decreases drastically, as can be seen in Figure 5.

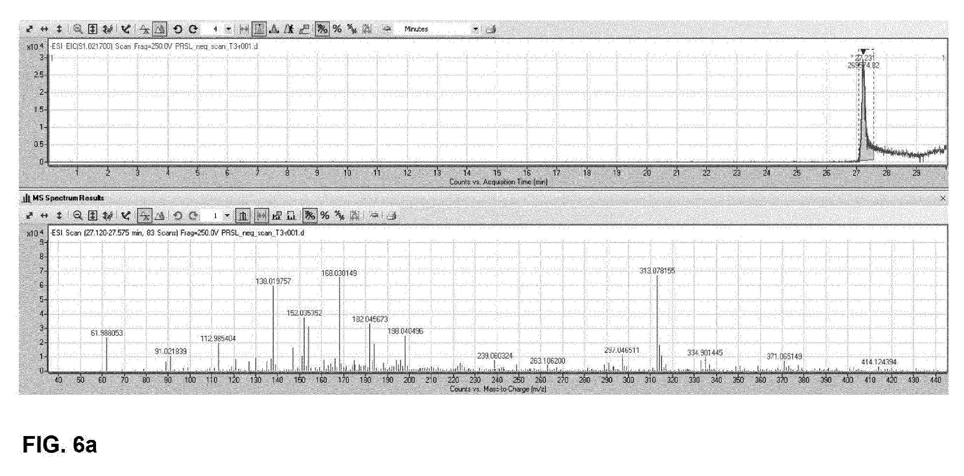

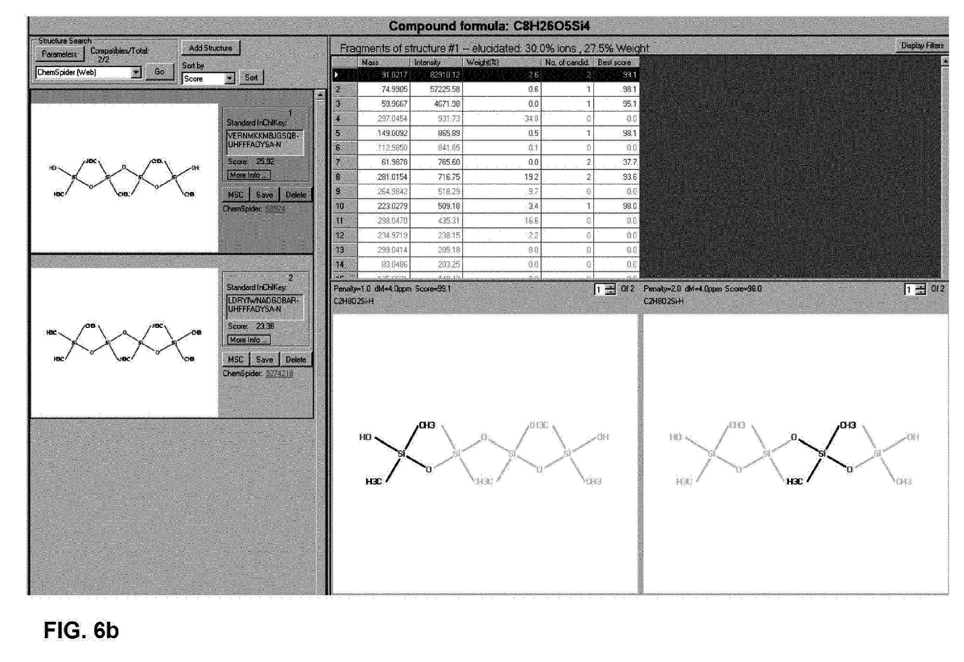

The use of the auxiliary MSC (Molecular Structure Correlator) software, which correlates the MS/MS spectrum acquired in high resolution with the molecular structure present in a database - in this specific case, Chemspider -made it possible to identify, though even with a not very high score, molecules structurally identical to the siloxanes, already previously identified in GC-MS with search in NIST08/Wiley08 library (see example in Figures 6a and 6b).

The untarget search in fullSCAN with search in an accurate mass library (Metlin) comprising about 20,000 compounds gave as a result about 3,000 possible compounds present in the solution containing free DNA.

These compounds were screened out in terms of abundance (10,000 counts), score (>75%) and difference in ppm (5ppm). A total of about 40 compounds were potentially identified as supermolecular superstructures that stabilize free DNA and thus make it analyzable.

Thus it is evident that the present invention has made it possible to obtain a stabilization of the nucleic acids present in the bloodstream through the addition of oxylans or oxylanic polymers.

The oxylanic polymers were then identified through GC-MS and partial identification in LC-qTOF MS/MS with structural correlation bringing to mind the siloxanic skeleton.

The results described above make it possible to conclude that the addition of siloxanic polymers or oxylanic o siloxanic derivatives to a sample of biological fluid proved to be surprisingly effective in stabilizing nucleic acids at ambient temperature, without resorting to freezing.

Furthermore, it was seen that the addition of further compounds such as alkyl alcohols, quaternary ammonium salts, tricarboxylic acids and aldehydes to the mixture of the invention made it possible to further stabilize the nucleic acids, and to allow them to be analyzed. In other words, the combination of these chemical species allowed the conservation and the collection of biological samples at ambient temperature and their transportation, without the degradation of the free nucleic acids contained in them, thus making DNA and/or RNA available for their extraction in the laboratory and their subsequent molecular, sequencing, genetic, chemical and clinical analysis.

It should be noted that some compounds are not used in solid and/or saline form but are already in an aqueous solution from which it is not possible to extract them without denaturing their chemical functionality.

In particular, the mixture may include any solvent generally used in dissolving a biological sample, such as for example an aqueous saline, isotonic buffered solution.

In conclusion, the main objective of the present invention is a chemical solution composed of 5 classes of chemical compounds, that is: glycerol polymers and polyethylene glycols with a molecular weight between 2,000 and 12,000 dalton, tetracarboxylic acids, quaternary ammonium salts, aldehydes and siloxanic polymers. The concentrations of the chemical species previously specified are such as to preferably lead to the product of solubility for each chemical compound capable of bringing to saturation the same chemical molecules in the organic sample.

Thus the mixture can be supplied in a kit for the stabilization/conservation of isolated biological material comprising a container for collecting a sample of said isolated biological material, the mixture previously described possibly already contained in said collecting container, and an illustrative instruction leaflet for the use of said kit. The container can be any sterile or non-sterile container suitable for the collection of samples of biological material, as for example jars and test tubes provided with a suitable stopper or pockets.

According to a further objective of the invention, a method will be described for the stabilization of nucleic acids and free cells in a biological fluid through the use of the previously described mixture.

Said method comprises the steps of:

- providing one or more of the previously described siloxanic polymers;
- mixing from 0.005 mg to 300 mg in weight of the aqueous solution of one or more of said polymers with 5 ml to 100 ml of a sample of biological fluid immediately after its isolation or just after its thawing.

Preferably, the mixing step comprises the addition of one or more of the further previously described chemical components, in any order and in the quantities previously described. More preferably, the method comprises collecting from 10 μl to 500 μl, preferably from 100 μl to 300 μl, more preferably 200 μl of mixture containing all the five components previously described at the above concentrations and mixing said collection with 2 ml to 50 ml, preferably from 10 to 30 ml, more preferably 10 ml of a sample of biological fluid.

According to a particularly preferred embodiment of the invention, a method or protocol was designed for preparing the biological sample, comprising the centrifugation of the component already supplemented with one or more of the components of the mixture for separating the particulates (cells) from the component without particles.

The method was devised to create a gradient of at least two phases inside the container (test tube) containing the biological sample supplemented with the mixture of the invention. For this purpose, the method comprises the steps of:

- mixing from 0.005 mg to 300 mg of one or more oxylanic polymers with 5 ml to 100 ml of a biological sample in liquid form, for example whole blood;
- centrifuging said sample for a time of 10 to 20 minutes at a speed of between 1500 and 10,000 rpm;
- collecting the supernatant;
- centrifuging the supernatant at a speed from 1,500 to 10,000 rpm for a time of 10 to 20 minutes,

in which the centrifugation is stopper without braking.

According to a preferred embodiment of the invention, the method comprises a first centrifugation of a sample of 10 ml of whole blood for 10 minutes at 5,000 rpm. Next, the supernatant is collected and is itself centrifuged at 5,000 rpm. The supernatant is then again collected and centrifuged at 5,000 rpm for a third time for another 10 minutes.

It should be noted that in the present separation protocol all the centrifugation steps were carried out at a constant acceleration and the braking power was set at zero, that is, without the help of the brake for the centrifuge. Further, thanks to the use of the polymeric components contained in the mixture of the invention, the above-mentioned centrifugation procedure makes it possible to create inside the test tube a separation of phases characterized by the stratification due to the different weight and density of said components determined on the basis of the relative density that developed within the biological sample itself. Since the components, as previously explained, accomplish different functions, that is, protect by binding to different molecules and particles, it is possible to obtain a clean separation of the particulate mass (cells and cell fragments) from the molecular part (nucleic acids) of interest. In this manner, there is the assurance that in a well-defined phase are present only the desired components, without contamination from undesirable components.

In fact, purely by way of example, in a test tube containing 10 ml of whole blood, following the above procedure, it is possible to create a gradient of at least two phases in which the top phase contains exclusively nucleic acids bound/protected by each of the components of the inventive mixture, and the bottom phase contains exclusively cells or parts of cells encapsulated by the polymeric component of the mixture.

Further, when the plasma sample was removed, in a volume quantity of not less than 2.5 ml, the protocol was calibrated to take advantage completely of the physical properties of the chemical species of the present invention, that is, the capability of mixing and stabilizing the nucleic acids, such as for example but not only, the density and vapor pressure at a constant volume. In this manner, the alteration of the cells is completely blocked, while the conservation of free nucleic acids in the biological sample is completely preserved.

In accordance with a further objective of the invention, herein is described the use of components for the stabilization/conservation of biological material. The compounds for stabilizing/conserving the biological material are those previously described, which are used at the concentrations indicated above.

The present invention also describes a diagnostic method for identifying genetic alterations in animals, preferably human subjects, comprising the mixing of one of the previously described chemical components with a sample of a biological fluid isolated from said animals, the storage of the mixture thereby obtained even at ambient temperature, the recovery of free nucleic acids from said biological fluid, and the identification of alterations in the sequences of said nucleic acids.

Similarly, a method can be perfected for identifying sequences of nucleic acids in an isolated biological sample, comprising the mixing of one of the previously described chemical components with said sample of isolated biological fluid, the storage of the mixture thus obtained even at ambient temperature, the recovery of free nucleic acids from said biological fluid, the identification of sequences of said nucleic acids through the use of probes and/or specific markers.

With a greater percentage of nucleic acids such as free DNA and/or RNA coming from the bloodstream, it is possible to distinguish specific DNA sequences using, for example, natural genetic markers, like single-nucleotide polymorphisms. These natural genetic markers can be used to determine the presence or absence of fetal chromosomal anomalies in case of prenatal diagnosis. Thus, the present invention provides a solid base for developing a diagnostic test, for example, but not only, in a non-invasive prenatal context.

In fact, the present invention has identified a chemical stabilizer that, by inhibiting the lysis of the cells during the collection of the sample, its transportation, handling and processing allows the recovery of a greater percentage of nucleic acids such as free DNA and/or RNA in the bloodstream.

EXPERIMENTAL EXAMPLES

To confirm the effectiveness of the mixture of the invention, studies were conducted on blood samples collected from ten pregnant women. Half of the samples were treated with the addition of the mixture of the present invention, while the other half of the samples was not treated. The average percentage of free fetal DNA recovered from the untreated samples was 3.3% of the total free DNA (making it effectively impossible to carry out any technical analysis on the free fetal DNA), while the average percentage of free fetal DNA in the samples treated with the mixture of the present invention was 20.2%, making to all intents and purposes the nucleic acids sufficiently available for non-invasive molecular analyses of any nature.

In a second phase of the study, the percentage of free fetal DNA was measured in 109 samples of maternal blood from pregnant women in the 12th week of gestation and obtained from a network of 29 clinical locations in 17 medical facilities. These samples were treated with the mixture of the present invention. An average of 25% of free fetal DNA was obtained for all 109 samples of treated maternal blood. The observed increase in the percentage of free fetal DNA is the result of a combination of factors. Firstly, the chemical class of the siloxanic chemical compounds of the present invention stabilizes the cell membranes, thus preventing cellular lysis and the release of DNAases and/or RNAases. In the second place, the presence of polymers derived from high-molecular-weight glycerol allows a large recovery of free fetal DNA by inhibiting DNA-destroying enzymes such as DNAases, in other words there is the inhibition of enzymes capable of destroying nucleic acids such as free DNA and/or RNA in the bloodstream.

In particular, different treatment combinations were tested for each component or combination of components of the single mixture, excepting siloxanes, even in different concentrations of use, with a sample and these were compared with the results obtained using the mixtures of the invention containing only siloxanes or a combination of said siloxanes with the other components. However, the percentages of free fetal DNA using the single components, even in combinations with each other but without siloxanes, were not sufficient to conduct non-invasive genetic analyses. Conversely, surprisingly, the mixture with the percentages of the single components previously specified made it possible to obtain the above-mentioned results. Therefore, it is evident that the siloxanes of the invention have a fundamental effect in the recovery and protection of nucleic acids. In particular, the presence of the siloxanes proved to have a synergic and potentiating effect for the isolation and recovery of free nucleic acids in biological fluids.

**Claims**

1. Chemical mixture comprising linear or cyclical siloxanic polymers having the general formula $[R_2SiO]_n$, wherein $R_2$ represents two alkyl groups, linear or branched, or an alkyl or aryl cycle or a saturated or unsaturated or aromatic heterocycle ring, said polymers having a viscosity value equal to or greater than 1.5 g/L and/or equal to or greater than 1.200 cSt calculated at 25°C, and a flash point equal to or greater than 55°C calculated with the closed cup system.

2. Chemical mixture according to claim 1, wherein said siloxanic polymers are selected from the group consisting of cyclic and heterocyclic compounds produced by a ring-opening-polymerization method induced by ionic primers, and the polymerization starting from alkoxysilanes.

3. Mixture according to claim 1 or 2, wherein said siloxanes are polydimethylsiloxane, polydiphenylsiloxane, octamethylcyclotetrasiloxane.

4. Mixture according to claim 1, 2 or 3, further comprising one or more of the compounds selected from tetracarboxylic acids, glycerol polymers and polyethylene glycols having a molecular weight between 2.000 and 12.000 dalton, aldehydes derivatized with alkyl functional groups $C_1$ - $C_6$ and/or alkyl chains containing up to 20 carbon atoms, quaternary ammonium salts or a phosphonium.

5. Mixture according to claim 4, wherein said tetracarboxylic acids are selected from the group consisting of EDTA, CaNa-EDTA, acid-citrate-dextrose and citrate-phosphate-dextrose-adenine, said polyethylene glycols being selected from Me-PEG-PEO and MePEG-PCL, said derivatized aldehydes are derivatized aldehydes having methyl, propyl, butyl alkyl groups, said quaternary ammonium salts are selected among trymethylglycine and betaine and/or other zwitterionic compounds wherein nitrogen atom provides a covalent bound positively charged in its saline form.

6. Mixture according to any one of claims 1 to 5, wherein the siloxanic polymers are present as a 100% aqueous solution at a concentration from da 0.005 mg to 300 mg in weight of the solution for 1 ml of mixture, the derivatized aldehydes are present at a concentration from 300 $\mu$l to 10 $\mu$l for 1 g/ml of a 20%-50% of aqueous solution for 1 ml of the mixture, the glycerol polymers are present as a 1 g/ml 50% aqueous solution at a concentration from 0.025 mg to 800 mg in weight for 1 ml of the mixture, the tricarboxylic acids are present at a concentration from 20 mg to 400 mg in weight for 1 ml of the mixture, the quaternary ammonium salts or phosphones are present at a concentration from 20 mg to 400 mg in weight for 1 ml of the mixture.

7. Use of the mixture according to any one of claims 1 to 6 for the stabilization/conservation of isolated biological material.

8. Use according to claim 7, wherein said isolated biological material is whole human blood.

9. Kit for the stabilization/conservation of isolated biological material, comprising a container for the collection of a sample of said isolated biological material, a mixture according to any one of claims 1 to 6, eventually pre-charged into said container, an illustrative leaflet containing instruction for use of said kit.

10. Method for the stabilization/conservation of isolated biological material, comprising the steps of:

  - providing a mixture according to any one of claims 1 to 6;
  - mixing from 0.005 mg to 300 mg of a 100% aqueous solution of siloxanic polymers with from 2 ml to 50 ml of a sample of said isolated biological material immediately after its isolation or just after its thawing.

11. Method according to claim 10, wherein said isolated biological material is a sample of whole blood, and the method comprises the steps of:

  - centrifuging said sample for 10 to 20 minutes at a speed comprised between 1.500 and 10.000 rpm;
  - collecting the supernatant;
  - centrifuging the supernatant at a speed comprised between 1.500 and 10.000 rpm,
  - wherein the braking of the centrifuging is carried out without brakes.

FIG. 1

FIG. 2a

TRISILOXANE, OCTAMETHYL- $$ 1,1,1,3,3,5,5,5-OCTAMETHYLTRISILOXANE $$ ALPHA-(TRIMETHYLSILYL)-OMEGA-METHYLPOLY(OXY(DIMETHYLSILYLENE)), MIXTURE WITH SILICON DIOXIDE $$ ANTIFOAM A: + Scan (5.489-5.511 min, 10 Scans) DEPC_9.D

BIS(TRIMETHYLSILYL) CARBONATE $$ SILANOL, TRIMETHYL-, CARBONATE (2:1) $$ CARBONIC ACID-DITMS $$ TRIMETHYLSILYL CARBONATE: + Scan (5.614-5.639 min, 11 Scans) DEPC_9.D

Acetic acid, bis[(trimethylsilyl)oxyl]-, trimethylsilyl ester: + Scan (6.056-6.084 min, 12 Scans) DEPC_9.D

Phenylethanolamine triTMS: + Scan (6.619-6.642 min, 10 Scans) DEPC_9.D

L-Proline, 1-(tert-butyldimethylsilyl)-, tert-butyldimethylsilyl ester: + Scan (7.242-7.265 min, 10 Scans) DEPC_9.D

Counts vs. Mass-to-Charge (m/z)

**FIG. 2b**

FIG. 3

FIG. 4

FIG. 5

FIG. 6a

FIG. 6b

**EUROPEAN SEARCH REPORT**

Application Number

EP 15 17 2412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/263665 A1 (SCHWARZ ULRICH [GB] ET AL) 27 October 2011 (2011-10-27) <br> * Reference Example 1 * <br> ----- | 1-5 | INV. <br> C08L83/04 <br> A01N1/02 |
| X | US 6 180 127 B1 (CALTON GARY J [US] ET AL) 30 January 2001 (2001-01-30) <br> * column 3; examples 2-4 * <br> ----- | 1-5 | |
| X | US 2013/085186 A1 (WENDEL VOLKER [DE] ET AL) 4 April 2013 (2013-04-04) <br> * example 8 * <br> ----- | 1-5 | |
| X | DATABASE WPI <br> Week 201230 <br> Thomson Scientific, London, GB; <br> AN 2012-C63469 <br> XP002735604, <br> -& CN 102 349 495 A (SHANGHAI FUNERAL&INTERMENT SERVICE CEN) 15 February 2012 (2012-02-15) <br> * abstract * <br> ----- | 1,2,7,9 | |
| X | US 6 022 589 A (KLOSOWSKI JEROME MELVIN [US] ET AL) 8 February 2000 (2000-02-08) <br> * column 1, lines 15-23 * <br> * column 3, lines 10-22 * <br> ----- | 1,2,7,9 | TECHNICAL FIELDS SEARCHED (IPC) <br> C08L <br> A01N |
| T | Anonymous: "Database: octamethylcyclotetrasiloxane (Cas=556672)", <br> , <br> 6 February 2015 (2015-02-06), XP055167808, <br> Retrieved from the Internet: <br> URL:http://www.arb.ca.gov/db/solvents/solvent_pages/Miscellaneous-HTML/octamethylcyclot.htm <br> [retrieved on 2015-02-06] <br> * the whole document * <br> ----- | 1-10 | |

-/--

The present search report has been drawn up for all claims

| Place of search | Date of completion of the search | Examiner |
|---|---|---|
| The Hague | 6 October 2015 | Dalet, Pierre |

EPO FORM 1503 03.82 (P04C01)

EP 2 957 600 A1

Europäisches
Patentamt
European
Patent Office
Office européen
des brevets

# EUROPEAN SEARCH REPORT

Application Number

EP 15 17 2412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/280728 A1 (SCHLUMPBERGER MARTIN [DE]) 24 October 2013 (2013-10-24) * abstract * * paragraphs [0015] - [0029] * ----- | 1,2,7,9 | |
| | | | TECHNICAL FIELDS SEARCHED (IPC) |

The present search report has been drawn up for all claims

| Place of search | Date of completion of the search | Examiner |
|---|---|---|
| The Hague | 6 October 2015 | Dalet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 15 17 2412

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2015

| Patent document cited in search report | | Publication date | Patent family member(s) | | Publication date |
|---|---|---|---|---|---|
| US 2011263665 | A1 | 27-10-2011 | AU | 2008300404 A1 | 26-03-2009 |
| | | | BR | PI0816991 A2 | 24-03-2015 |
| | | | CA | 2699696 A1 | 26-03-2009 |
| | | | CN | 101861379 A | 13-10-2010 |
| | | | EP | 2190962 A1 | 02-06-2010 |
| | | | GB | 2453038 A | 25-03-2009 |
| | | | JP | 5615708 B2 | 29-10-2014 |
| | | | JP | 2010539276 A | 16-12-2010 |
| | | | US | 2010279906 A1 | 04-11-2010 |
| | | | US | 2011263665 A1 | 27-10-2011 |
| | | | WO | 2009037445 A1 | 26-03-2009 |
| US 6180127 | B1 | 30-01-2001 | NONE | | |
| US 2013085186 | A1 | 04-04-2013 | CA | 2662911 A1 | 27-03-2008 |
| | | | CN | 101516448 A | 26-08-2009 |
| | | | EP | 2066406 A2 | 10-06-2009 |
| | | | JP | 2010503715 A | 04-02-2010 |
| | | | KR | 20090073170 A | 02-07-2009 |
| | | | RU | 2009114552 A | 27-10-2010 |
| | | | US | 2010048737 A1 | 25-02-2010 |
| | | | US | 2013085186 A1 | 04-04-2013 |
| | | | WO | 2008034764 A2 | 27-03-2008 |
| CN 102349495 | A | 15-02-2012 | NONE | | |
| US 6022589 | A | 08-02-2000 | DE | 69823244 D1 | 27-05-2004 |
| | | | DE | 69823244 T2 | 28-04-2005 |
| | | | EP | 0852992 A2 | 15-07-1998 |
| | | | JP | 4878665 B2 | 15-02-2012 |
| | | | JP | H10218701 A | 18-08-1998 |
| | | | US | 6022589 A | 08-02-2000 |
| US 2013280728 | A1 | 24-10-2013 | EP | 2468862 A1 | 27-06-2012 |
| | | | EP | 2655617 A1 | 30-10-2013 |
| | | | JP | 2014500513 A | 09-01-2014 |
| | | | US | 2013280728 A1 | 24-10-2013 |
| | | | WO | 2012085261 A1 | 28-06-2012 |

EPO FORM P0459

For more details about this annex : see Official Journal of the European Patent Office, No. 12/82